# EUROPÄISCHE PATENTANMELDUNG

(11) **EP 1 094 243 A1**
(43) Veröffentlichungstag der Anmeldung: **25.04.2001**
(21) Anmeldenummer: 00121902.1
(22) Anmeldetag: 07.10.2000
(51) Int. Cl.: F16G 11/00, F16G 11/12

(54) **Vorrichtung zum Verbinden und Spannen eines Seiles**

(30) Priorität: 23.10.1999 DE 19951149
(71) Anmelder: Kendrion RSL Germany GmbH, 57368 Lennestadt (DE)
(72) Erfinder: Dipl.-Ing. Jochen Richard, D- 57368 Lennestadt-Sallhausen (DE)
(74) Vertreter: Köchling, Conrad, Dipl.-Ing.

(57) **Zusammenfassung**

Um eine Vorrichtung zum Verbinden und Spannen eines Seiles, insbesondere eines Drahtseiles zu schaffen, die eine Schnellmontage ermöglicht, wobei auch eine fertigungstechnisch einfache Lösung geschaffen werden soll, wird vorgeschlagen, daß ein Gehäuseteil (1) vorgesehen ist, an dem mit dem Gehäuseteil (1) verbindbaren Ende des Seils (6) ein Gewindestift (3) fixiert ist, daß das Gehäuseteil (1) einen Einschubkanal (7) für den Gewindestift (3) aufweist und daß in dem Einschubkanal (7) eine Federmutter (2) gehaltert ist, in die der Gewindestift (3) einsteckbar und in der der Gewindestift (3) in Steckposition gewindemäßig verstellbar ist.

## Beschreibung

Die Erfindung betrifft eine Vorrichtung zum Verbinden und Spannen eines Seiles, insbesondere eines Drahtseiles.

Im Stand der Technik sind entsprechende Vorrichtungen bekannt, wobei am Ende des Seiles eine Ringschraube oder dergleichen befestigt wird, die in eine entsprechende Gewindeausbildung einschraubbar ist, um das Seil mit dem Gehäuseteil zu verbinden und auch spannen zu können.

Eine derartige Ausbildung ist fertigungstechnisch aufwendig und bei der Manipulation zeitaufwendig, da einerseits eine Befestigung der Ringschraube am Seilende die Anordnung von zusätzlichen Klemmteilen und gegebenenfalls einer Kausche erforderlich macht und andererseits der Spannungszustand des Seiles durch gewindemäßiges Verstellen längere Zeit in Anspruch nimmt.

Ausgehend von diesem Stand der Technik liegt der Erfindung die Aufgabe zugrunde, eine Vorrichtung gattungsgemäßer Art zu schaffen, die eine Schnellmontage ermöglicht, wobei auch eine fertigungstechnisch einfache Lösung geschaffen werden soll.

Zur Lösung dieser Aufgabe schlägt die Erfindung vor, daß ein Gehäuseteil vorgesehen ist, an dem mit dem Gehäuseteil verbindbaren Ende des Seils ein Gewindestift fixiert ist, daß das Gehäuseteil einen Einschubkanal für den Gewindestift aufweist und daß in dem Einschubkanal eine Federmutter gehaltert ist, in die der Gewindestift einsteckbar und in der der Gewindestift in Steckposition gewindemäßig verstellbar ist.

An dem mit dem Gehäuseteil verbindbaren Ende des Seils kann ein Gewindestift angeschweißt sein. Es ist auch möglich, den Gewindestift am Ende einer Hülse vorzusehen, in die das Seilende eingeschoben werden kann, und wobei die Hülse dann zur Fixierung des Seilendes verquetscht oder im Durchmesser reduziert wird. Das mit dem Gewindestift versehene Seilende kann in einfacher Weise in den Einschubkanal des Gehäuseteils eingeschoben werden und in die Federmutter eingedrückt werden, wobei entsprechend der Seillänge der Gewindestift mehr oder weniger weit durch die Federmutter hindurchgesteckt werden kann. Anschließend kann die Seilverbindung gestrafft werden, indem entweder das Gehäuse oder das Seil gedreht wird, so daß eine gewindemäßige Verstellung in der Federmutter stattfindet und damit eine Straffung des Seiles. Durch entgegengesetztes Drehen kann die Verbindung wieder gelöst werden.

Die Vorrichtung ist äußerst einfach zu fertigen, wobei der Montageaufwand bei der Benutzung der Vorrichtung äußerst zeitsparend ist.

Bevorzugt ist vorgesehen, daß das Gehäuseteil flügelartige Handhaben aufweist, so daß es um die vom angeschlossenen Gewindestift gebildete Drehachse drehbar ist.

Hierdurch ist eine einfache Drehung des Gehäuseteiles ermöglicht, wobei das Gehäuseteil beispielsweise über einen Drehwirbel oder dergleichen an gesteilfesten Teilen gehaltert sein kann. Das Gehäuseteil kann im übrigen aus Kunststoff oder ähnlichem Werkstoff bestehen.

Um die Fertigung und Handhabung bei dem Zusammenbau zu erleichtern, kann vorgesehen sein, daß das Gehäuseteil längsmittig geteilt ist.

Die beiden Gehäuseteile können in geeigneter Weise miteinander zu einer festen Einheit verbunden werden.

Eine bevorzugte Weiterbildung wird darin gesehen, daß das Gehäuseteil eine orthogonal zur Mittelachse des Gewindestifts beziehungsweise des Einschubkanals verlaufende Einschubtasche für die im wesentlichen ebene Federmutter aufweist, wobei die Einschubtasche aus einer Gehäusefläche offen ausmündet.

Hierdurch ist es in einfacher Weise möglich, die Federmutter in das Gehäuseteil lagerichtig einzubringen.

Eine unter Umständen bevorzugte Weiterbildung wird darin gesehen, daß an das Gehäuseteil an dem Ende, das dem Gewindestift abgewandt ist, koaxial zum Gewindestift beziehungsweise zum Einschubkanal ein weiteres Seil angeschlossen ist.

Auf diese Weise kann die Vorrichtung zur Verbindung zweier Seile benutzt werden.

Unter Umständen kann auch vorgesehen sein, daß das weitere Seil endseitig mit einem Nippel versehen ist, der in einer Aufnahme des Gehäuseteils gehaltert ist und von dem das Seil auf der dem Gewindestift abgewandten Gehäuseseite austritt.

Durch die Anordnung des Nippels ist es möglich, das Gehäuseteil zum Zwecke des Spannens des ersten Seiles zu drehen, ohne daß das weitere Seil mitgedreht wird, weil der Nippel sich in der entsprechenden Aufnahme des Gehäuseteils drehen kann.

Bevorzugt kann auch vorgesehen sein, daß das weitere Seil endseitig ebenfalls mit einem Gewindestift versehen ist, das Gehäuseteil einen weiteren Einschubkanal für den Gewindestift aufweist und in dem weiteren Einschubkanal eine weitere Federmutter gehaltert ist, in die der Gewindestift einsteckbar und in Steckposition gewindemäßig verstellbar ist.

Bei dieser Ausbildung ist an beiden Endbereichen des Gehäuseteils eine identische Ausbildung von Einschubkanal und Federmutter vorgesehen, so daß jeweils ein mit einem Gewindestift versehenes Seilende eingesteckt werden kann und die Seile durch Drehung des Gehäuseteiles gestrafft werden können.

Ein Ausführungsbeispiel der Erfindung ist in der Zeichnung dargestellt und im folgenden näher beschrieben.

Es zeigt:
- Figur 1: eine explosionsartige Darstellung der Vorrichtung;
- Figur 2: die Vorrichtung in der Montagesollage, teilweise aufgebrochen.

In der Zeichnung ist eine Vorrichtung zum Verbinden und Spannen zweier Seile 5,6 gezeigt. Die Vorrichtung besteht aus einem Gehäuseteil 1, wobei an dem mit dem Gehäuseteil 1 verbindbaren Ende des Seils 6 ein Gewindestift 3 fixiert ist. Das Gehäuseteil 1 weist einen Einschubkanal 7 für den Gewindestift 3 auf. In dem Einschubkanal 7 ist nahe der Mündung des Einschubskanals eine Federmutter 2 fixiert, in die der Gewindestift 3 einsteckbar ist und in der der Gewindestift in der Steckposition gewindemäßig verstellbar ist, um das Seil 6 zu straffen.

Die Federmutter ist ein im wesentlichen ebenes Blechformteil aus Federblech, an dem ein Durchzug vorgesehen ist, der das Gegengewinde für den Gewindestift 3 bildet. Die Federmutter 2 ist derart angeordnet, daß der Gewindestift 3 in das Gehäuseteil 1 eingedrückt werden kann und dabei die Federmutter passieren kann, während bei auftretenden Zugkräften, die an dem Gewindestift 3 beziehungsweise dem Seil 6 angreifen, eine Verschiebung des Gewindestiftes 3 in der Federmutter 2 ausgeschlossen ist. Zum Lösen der Verbindung kann der Gewindestift 3 oder das Gehäuse 1 entsprechend gegensinnig gedreht werden.

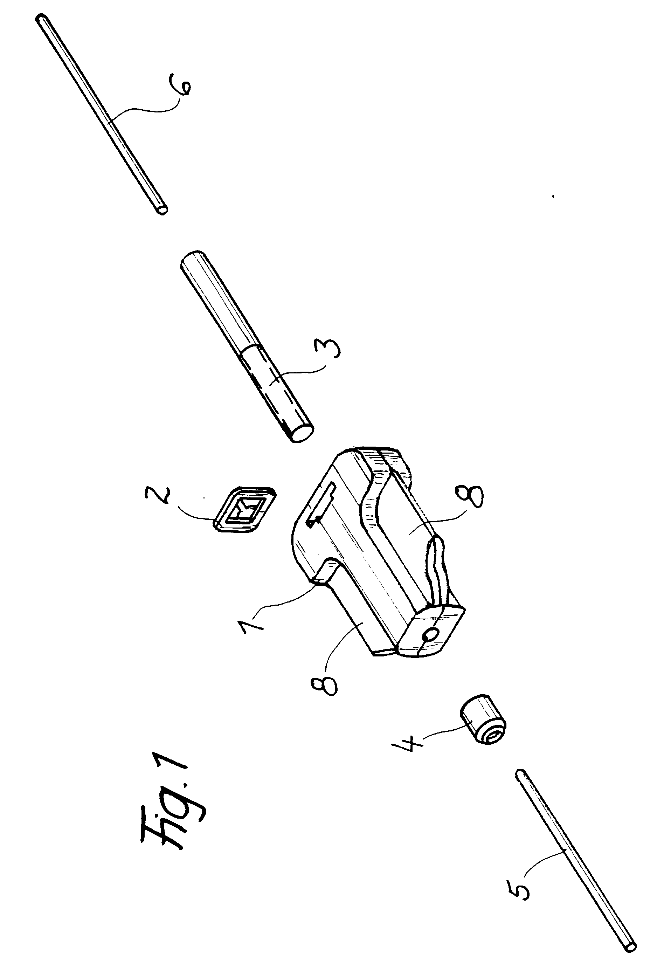

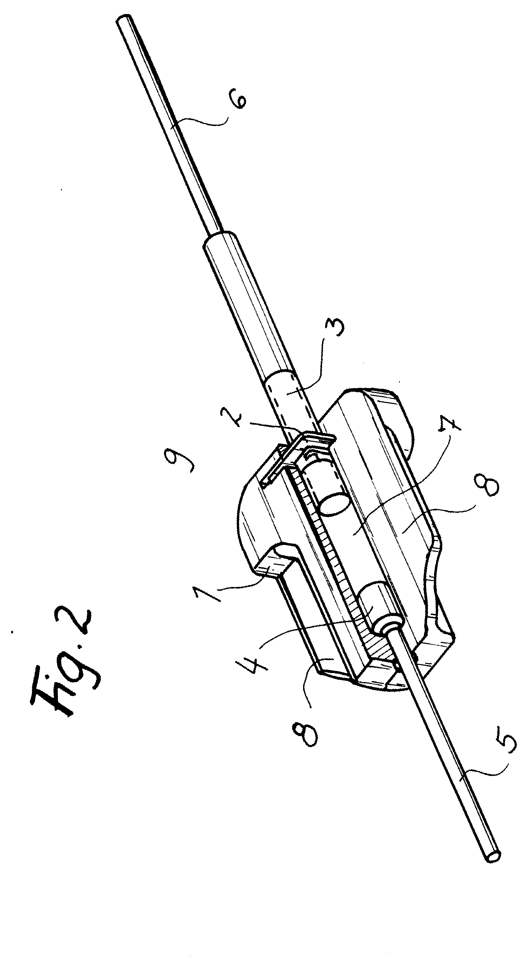

Vorzugsweise ist das Gehäuseteil 1 drehbar, wobei das Gehäuseteil 3 flügelartige Handhaben 8 aufweist, so daß es um die angeschlossenen Gewindestift 3 gebildete Drehachse drehbar ist. Vorzugsweise ist das Gehäuseteil 1 längsmittig geteilt, was die Herstellung und auch die Montage von Einzelelementen erleichtert. In der Soliposition, die in Figur 1 und 2 gezeigt ist, sind die das Gehäuseteil 1 bildenden Teilstücke miteinander fest verbunden.

Das Gehäuseteil 1 weist eine orthogonal zur Mittelachse des Gewindestifts 3 beziehungsweise des Einschubkanales 7 verlaufende Einschubtasche 9 für die im wesentlichen ebene Federmutter 2 auf, wobei die Einschubtasche 9 aus einer Gehäusefläche offen ausmündet. Die Federmutter kann somit bei geschlossenem Gehäuse in einfacher Weise in das Gehäuse eingeführt werden und lagerichtig positioniert werden.

An das Gehäuseteil 1 ist an dem Ende, daß dem Gewindestift 3 abgewandt ist, koaxial zum Gewindestift 3 beziehungsweise zum Einschubkanal 7 ein weiteres Seil 5 angeschlossen. Das weitere Seil 5 kann endseitig mit einem Nippel 4 versehen sein, der in einer entsprechenden Aufnahme des Gehäuseteiles 1 gehaltert ist und von dem das Seil 5 auf der dem Gewindestift 3 abgewandten Gehäuseseite austritt.

Die erfindungsgemäße Anordnung ermöglicht es in einfacher Weise zwei Seile miteinander schnellstmöglich zu verbinden und dennoch auch in einfacher Weise eine Straffung der Seilverbindung durch Drehung des Gehäuseteiles 1 herbeizuführen. Das Lösen der Verbindung kann durch analog entgegengesetztes Drehen des Gehäuseteiles 1 herbeigeführt werden. Die erfindungsgemäße Lösung ist kostengünstig zu fertigen und äußerst montagefreundlich.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zum Verbinden und Spannen eines Seiles, insbesondere eines Drahtseiles,
**dadurch gekennzeichnet,** daß ein Gehäuseteil vorgesehen ist, an dem mit dem Gehäuseteil (1) verbindbaren Ende des Seils (6) ein Gewindestift (3) fixiert ist, daß das Gehäuseteil (1) einen Einschubkanal (7) für den Gewindestift (3) aufweist und daß in dem Einschubkanal (7) eine Federmutter (2) gehaltert ist, in die der Gewindestift (3) einsteckbar und in der der Gewindestift in Steckposition gewindemäßig verstellbar ist.

2. Vorrichtung nach Anspruch 1,
**dadurch gekennzeichnet,** daß das Gehäuseteil (1) flügelartige Handhaben (8) aufweist, so daß es um die vom angeschlossenen Gewindestift (3) gebildete Drehachse drehbar ist.

3. Vorrichtung nach Anspruch 1 oder 2,
**dadurch gekennzeichnet,** daß das Gehäuseteil (1) längemittig geteilt ist.

4. Vorrichtung nach einem der Ansprüche 1 bis 3,
**dadurch gekennzeichnet,** daß das Gehäuseteil (1) eine orthogonal zur Mittelachse des Gewindestifts (3) beziehungsweise des Einschubkanals (7) verlaufende Einschubtasche (9) für die im wesentlichen ebene Federmutter (2) aufweist, wobei die Einschubtasche (9) aus einer Gehäusefläche offen ausmündet.

5. Vorrichtung nach einem der Ansprüche 1 bis 4,
**dadurch gekennzeichnet,** daß an das Gehäuseteil (1) an dem Ende, das dem Gewindestift (3) abgewandt ist, koaxial zum Gewindestift (3) beziehungsweise zum Einschubkanal (7) ein weiteres Seil (5) angeschlossen ist.

6. Vorrichtung nach Anspruch 5,
**dadurch gekennzeichnet,** daß das weitere Seil (5) endseitig mit einem Nippel (4) versehen ist, der in einer Aufnahme des Gehäuseteils (1) gehaltert ist und von dem das Seil (5) auf der dem Gewindestift (3) abgewandten Gehäuseseite austritt.

7. Vorrichtung nach Anspruch 5,
**dadurch gekennzeichnet,** daß das weitere Seil (5) endseitig ebenfalls mit einem Gewindestift versehen ist, das Gehäuseteil (1) einen weiteren Einschubkanal für den Gewindestift aufweist und in dem weiteren Einschubkanal eine weitere Federmutter gehaltert ist, in die der Gewindestift einsteckbar und in Steckposition gewindemäßig verstellbar ist.
